# EUROPÄISCHE PATENTSCHRIFT

(11) **EP 0 923 719 B1**
(45) Veröffentlichungstag und Bekanntmachung des Hinweises auf die Patenterteilung: **07.11.2001**
(21) Anmeldenummer: 97942759.8
(22) Anmeldetag: 29.08.1997
(51) Int. Cl.: G01M 17/007, G01M 17/04, G01M 17/06

(54) **FAHRZEUGPRÜFVORRICHTUNG**
VEHICLE INSPECTION DEVICE
DISPOSITIF POUR LE CONTROLE DE VEHICULES

(30) Priorität: 02.09.1996 DE 19635194
(43) Veröffentlichungstag der Anmeldung: 23.06.1999
(73) Patentinhaber: Müller, Roland, 66453 Gersheim (DE)
(72) Erfinder: Müller, Roland, 66453 Gersheim (DE)
(74) Vertreter: Vièl, Christof, Dipl.-Ing.
(86) Internationale Anmeldenummer: DE9701900
(87) Internationale Veröffentlichungsnummer: WO9810263

(56) Entgegenhaltungen:
- EP-A- 0 124 258
- DE-A- 2 735 925
- FR-A- 1 096 315
- US-A- 2 709 361
- PATENT ABSTRACTS OF JAPAN vol. 9, no. 177 (P-375) [1900] , 23.Juli 1985 & JP 60 052736 A (HARADAKUNI K.K.), 26.März 1985,

## Beschreibung

Die Erfindung betrifft eine Fahrzeugprüfvorrichtung, mittels der verschiedene Prüfungen an einem Fahrzeug durchgeführt werden.

Derartige Fahrzeugprüfvorrichtungen sind bekannt. Beispielsweise auf dem Gebiet des Prüfens von Bremsen werden die auch als "Rollenprüfstand" bezeichneten Vorrichtungen verwendet. Hierbei wird die Leistungsfähigkeit der Bremsen eines auf dem Prüfstand befindlichen Fahrzeuges getestet, indem die angetriebenen Rollen durch die Fahrzeugbremsen abgebremst werden.

Es sind zahlreiche Fahrzeugprüfvorrichtungen für den Einsatz in Werkstätten bekannt, die in der Regel eine Bremsen-, Spur-, Achs- und Lenkspielprüfvorrichtung sowie teilweise auch einen Stoßdämpferprüfstand umfassen. Hierzu werden in der Regel die einzelnen Prüfelemente hintereinander in einer Prüfstraße angeordnet. Der Platzbedarf für eine derartige Prüfstraße ist groß, so daß kleinere Reparaturwerkstätten häufig nicht in der Lage sind, eine komplette Prüfung der relevanten Parameter anzubieten. Hinzu kommt, daß ein Unterflureinbau einer derartigen Prüfstraße sehr kostspielig ist, da für alle hintereinander angeordneten Prüfvorrichtungen entsprechende Vertiefungen im Boden der Werkstatt vorliegen müssen. Hinzu kommt schließlich auch der hohe Fertigungsaufwand für die aus relativ vielen Einzelelementen bestehende Prüfstraße, der wiederum hohe Anschaffungskosten mit sich bringt.

In der EP-B-0 373 653 wird eine Fahrzeugprüfvorrichtung beschrieben, wobei die Reifen des Fahrzeugs auf bewegbaren Stützen platziert sind und die Stützen jeweils für die Räder einer Fahrzeugseite auf einem Paar beweglicher Plattformen angeordnet sind, die parallel zueinander auf gegenüberliegenden Seiten einer Meßbezugslinie angeordnet sind und die Stützenpaare auf der Vorderradseite und auf der Hinterradseite und das Paar beweglicher Plattformen symmetrisch in der Breitenrichtung des Fahrzeugs auf jeweilige Abstützpunkte der Stützen bzw. der Plattformen zu odere von diesen weg bewegbar sind, wobei die Abstützpunkte etwa auf der Meßbezugslinie angeordnet sind. Diese Vorrichtung hat sich aufgrund ihrer Kompliziertheit nicht auf dem Markt der Werkstattausrüstungen durchsetzen können.

Aus der EP-A-0 124 258 ist eine Fahrzeugprüfvorrichtung gemäß dem Oberbegriff bekannt, die axial verschiebbare angetriebene Rollen aufweist. In dieser Fahrzeugprüfvorrichtung ist parallel zu den axial verschiebbaren angetriebenen Rollen eine dritte Rolle im Reifenkontaktbereich angeordnet, die mit Mitteln zum Bestimmen und Anzeigen der axialen Verschiebung der dritten Rolle versehen ist. Mit dieser Vorrichtung kann die Spur des Fahrzeugs ermittelt werden.

Aus der DE-A-27 35 925 ist eine Prüfeinrichtung für Kraftfahrzeuge bekannt, die zwei in vorbestimmtem Abstand parallel zueinander angeordnete Laufrollen umfaßt, wobei zwischen den beiden Rollen eine dritte Rolle als Prüfrolle angeordnet ist, welche mit dem Rad in Reibkontakt steht. Mit dieser Vorrichtung können verschiedene Messungen an einem Kraftfahrzeug durchgeführt werden, allerdings keine Stoßdämpfermessungen.

Aus der US-A-2,709,361 ist eine Vorrichtung zum Übertragen von Schwingungen auf ein Fahrzeug bekannt, wobei zwischen zwei Rollen eine dritte "Rolle" mit rechteckigem Querschnitt angeordnet ist, die dazu dient, unebene Straßen zu simulieren.

In der darauf basierenden, nachveröffentlichten EP-A-0 747 688 ist eine Fahrzeugtestvorrichtung beschrieben, die zwischen zwei Laufrollen ein Stützelement aufweist, das in vertikaler Richtung verschiebbar ist und mit dem die Federung und die Dämpfung eines Fahrzeuges geprüft werden können. Allerdings kann mit dieser Vorrichtung keine Spurmessung vorgenommen werden.

Aufgabe der Erfindung ist es daher, eine Fahrzeugprüfvorrichtung zu schaffen, die es ermöglicht, bei einem möglichst geringeu Platzbedarf und Kostenaufwand möglichst viele Prüfungen an einem Fahrzeug durchzuführen.

Diese Aufgabe wird erfinduugsgemäß durch eine Fahrzeugprüfvorrichtung mittels der verschiedene Prüfungen an einem Fahrzeug durchgeführt werden, gelöst, wobei die Reifen des Fahrzeugs jeweils auf zwei antreibbaren drehbaren Rollen angeordnet werden, wobei zwischen den beiden Rollen eine axial verschiebbare dritte Rolle in einer in vertikaler Richtung verschiebbaren, oberhalb einer Stoßdämpferprüfvorrichtung angeordneten Radaufstandsplatte angeordnet ist, an der die gesamte Aufstandskraft des Rades während der Stoßdämpferprüfung anliegt und Mittel zum Messen der axialen Verschiebung der dritten Rolle vorgesehen sind.

Durch diese Maßnahme können im Bereich der Rollen neben der üblichen Bremsenprüfung auch eine Stoßdämpferprüfung und eine Spurmessung vorgenommen werden. Dies erspart Einbaukosten und Platz, da der zusätzliche Platzbedarf für den Einbau der Stoßdämpferprüfvorrichtung sehr gering ist.

Es liegt im Rahmen der Erfindung, daß die antreibbaren drehbaren Rollen in axialer Richtung verschiebbar sind.

Hierdurch wird es möglich, wiederum ohne weiteren Platzbedarf zusätzlich eine Achs- und Lenkspielprüfung vorzunehmen.

Es ist zweckmäßig, daß die axiale Verschiebbarkeit der antreibbaren drehbaren Rollen blockierbar ist.

Vorteilhaft ist auch, daß die antreibbaren drehbaren Rollen parallel zueinander axial verschiebbar sind.

Ebenso kann vorgesehen sein, daß die antreibbaren drehbaren Rollen in gegensinniger Richtung axial verschiebbar sind.

Es liegt im Rahmen der Erfindung, daß die Fahrzeugprüfvorrichtung unterflur montierbar ist.

Weiterhin ist es sinnvoll, daß die Fahrzeugprüfvorrichtung auf einer Hebebühne montierbar ist.

Im folgenden wird eine beispielhafte Ausbildung der Erfindung anhand von Zeichnungen beschrieben.

Es zeigen
- Fig. 1: eine Draufsicht auf eine erfindungsgemäße Fahrzeugprüfvorrichtung,
- Fig. 2: eine Seitenansicht einer erfindungsgemäßen Fahrzeugprüfvorrichtung.

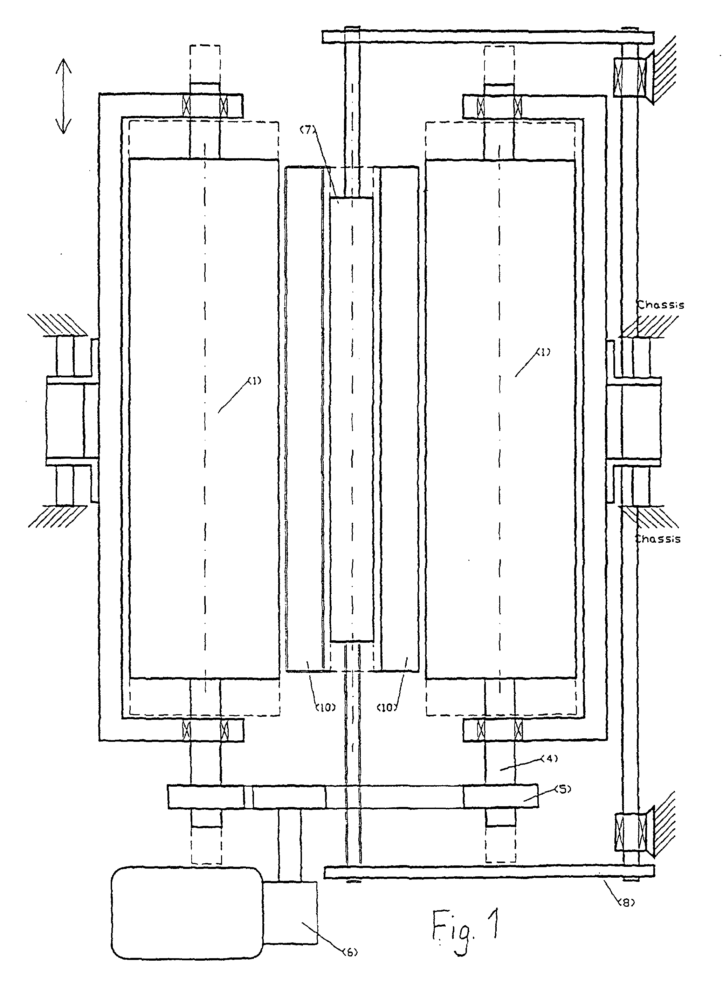

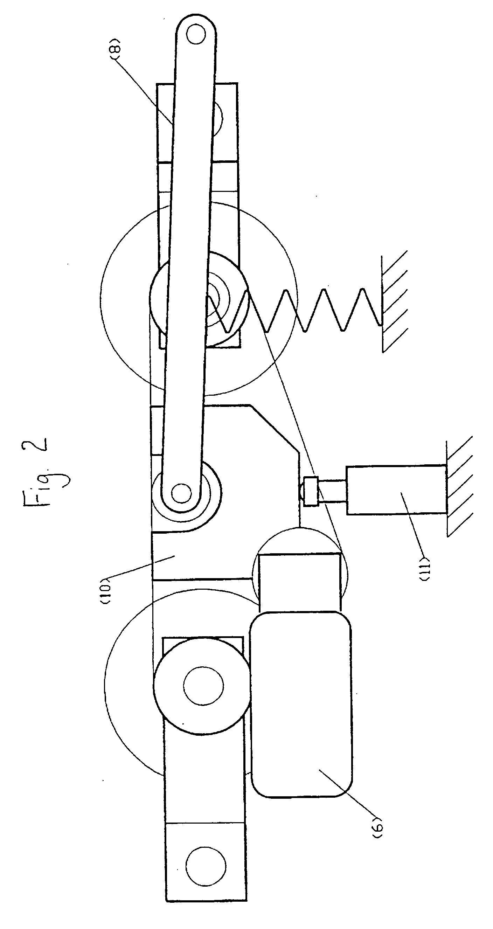

Wie aus den Fig. 1 und 2 ersichtlich, weist die erfindungsgemäße Fahrzeugprüfvorrichtung zwei von einem Autrieb 6 angetriebene drehbare Rollen 1 auf, mit denen ein Rad des zu prüfenden Fahrzeugs während des Prüfvorgangs in Kontakt steht. Der Antrieb der Rolleu erfolgt im gezeigten Beispiel über vom Antrieb 6 über Riemen auf entsprechende Räder 5 auf den Achsen 4 der Rollen 1. Mit einer derartigen Vorrichtung können die Bremsen eines Fahrzeugs geprüft werden, indem die durch das gebremste Fahrzeug auf die Rollen 1 ausgeübte Bremskraft ermittelt wird.

Zwischen den beiden Rollen und parallel dazu ist eine dritte Rolle 7 angeordnet, die axial verschiebbar in einem kreisförmig beweglichen Rahmen 8 angeordnet ist. Die dritte Rolle 7 ist in einer Radaufstandsplatte 10 gelagert. Diese Radaufstandsplatte 10 ist in vertikaler Richtung verfahrbar. Die dritte Rolle 7 stellt die Abwicklung einer üblicherweise 1 m langen Spurmeßplatte dar und steht mit dem Reifen des Fahrzeuges, der auf den beiden Rollen 1 angeodnet ist, in Kontakt. Nach einer Anzahl von Umdrehung der dritten Rolle 7, die beispielsweise einer Fahrstrecke von 1 m entsprechen, wird die axiale Abweichung der dritten Rolle 7 von der Normalstellung gemessen und aus diesem Wert die Spur des Fahrzeugs ermittelt.

Durch ein axiales Verschieben der Rollen 1 in entgegengesetzter Richtung kann das Lenkspiel des Fahrzeuges geprüft werden, durch ein axiales Verschieben der Rollen 1 in gleichsinniger Richtung ist eine Prüfung des Achsspiels möglich.

Im Bereich der beiden Rollen 1 ist bei der erfindungsgemäßen Vorrichtung eine Stoßdämpferprüfvorrichtung 11 angeordnet. Dies kann, wie dargestellt, dadurch erfolgen, daß unterhalb der vertikal verschiebbaren Radaufstandsplatte 10 ein Stoßdämpferprüfvorrichtung 11 angeordnet ist. Zur Stoßdämpferprüfung wird die Radaufstandsplatte 10 dann angehoben, so daß die gesamte Aufstandskraft des Rades, an dem die Stoßdämpferprüfung durchgeführt werden soll, auf der Radaufstandsplatte 10 liegt. Da deren Masse bekannt ist, können die übrigen für die Stoßdämpferprüfung maßgeblichen Massenverhältnisse aus dem Schwingverhalten des schwingenden Systems Rad-Stoßdämpfer-Federung-Karosserie ermittelt werden.

Der Einbau der Stoßdämpferprüfvorrichtung 11 unter dem Rollenprüfstand ist platzsparend, da das bisherige, in der Regel mobile Stoßdämpferprüfgerät in der Werkstatt entfallen kann. Zudem kann die ohnehin für die Spurmessung vorhandene Radaufstandsplatte 10 mitgenutzt werden, was eine Kostenersparnis mit sich bringt. Schließlich ist die Stoßdämpferprüfvorrichtung 11 in einer unterflur eingebauten Fahrzeugprüfvorrichtung optimal geschützt.

Die vertikale Verfahrbarkeit der Radaufstandsplatten 10 ist auch insofern von Vorteil, als das in der Regel schwierige Herausfahren des Fahrzeuges aus der Vertiefung zwischen den Rollen 1 durch ein leichtes Anheben der Radaufstandsplatten 10 deutlich erleichtert werden kann.

Die erfindungsgemäße Fahrzeugprüfvorrichtung kann wie beschrieben unterflur eingebaut werden, wobei aufgrund der kompakten Bauweise eine deutlich geringere Aushebung vorgenommen werden muß als dies bisher erforderlich war. Es ist allerdings auch möglich und sogar zweckmäßig, die Fahrzeugprüfvorrichtung auf einer Hebebühne anzuordnen, da dadurch die Kosten für eine Unterflurmontage entfallen und zudem in idealer Weise der untere Bereich des Fahrzeugs begutachtet oder auch bearbeitet werden kann.

## Patentansprüche

1. Fahrzeugprüfvorrichtung, mittels der verschiedene Prüfungen an einem Fahrzeug durchgeführt werden, wobei die Reifen des Fahrzeugs jeweils auf zwei antreibbaren drehbaren Rollen (1) angeordnet werden, wobei zwischen den beiden Rollen (1) eine axial verschiebbare dritte Rolle (7) in einer in vertikaler Richtung verschiebbaren, oberhalb einer Stoßdämpferprüfvorrichtung (11) angeordneten Radaufstandsplatte (10) angeordnet ist, an der die gesamte Aufstandskraft des Rades während der Stoßdämpferprüfung anliegt und Mittel zum Messen der axialeu Verschiebung der dritten Rolle (7) vorgesehen sind.

2. Fahrzeugprüfvorrichtung gemäß Anspruch 1, **dadurch gekennzeichnet, daß** die antreibbaren drehbaren Rollen (1) in axialer Richtung verschiebbar sind.

3. Fahrzeugprüfvorrichtung gemäß Anspruch 2, **dadurch gekennzeichnet, daß** die axiale Verschiebbarkeit der antreibbaren drehbaren Rollen (1) blockierbar ist.

4. Fahrzeugprüfvorrichtung gemäß Anspruch 2, **dadurch gekennzeichnet, daß** die antreibbaren drehbaren Rollen (1) parallel zueinander axial verschiebbar sind.

5. Fahrzeugprüfvorrichtung gemäß Anspruch 2, **dadurch gekennzeichnet, daß** die antreibbaren drehbaren Rollen (1) in gegensinniger Richtung axial verschiebbar sind.

6. Fahrzeugprüfvorrichtung gemäß einem der Ansprüche 1 bis 5, **dadurch gekennzeichnet, daß** die Fahrzeugprüfvorrichtung unterflur montierbar ist.

7. Fahrzeugprüfvorrichtung gemäß einem der Ansprüche 1 bis 5, **dadurch gekennzeichnet, daß** die Fahrzeugprüfvorrichtung auf einer Hebebühne montierbar ist.

## Claims

1. A vehicle test apparatus with which various tests can be carried out on a vehicle, the tyres of the vehicle being disposed in each case on two drivable, rotatable rollers (1) between which there is an axially movable third roller (7) disposed in a vertically adjustable tyre-contact slab (10) which is located above a shock-absorber testing device (11) and which takes the entire, normal force of the wheel while the shock absorbers are being tested, and there being means provided for measuring the axial displacement of the third roller (7).

2. The vehicle test apparatus of claim 1, **characterized in that** the drivable, rotatable rollers (1) can move in axial direction.

3. The vehicle test apparatus of claim 2, **characterized in that** axial movement of the drivable, rotatable rollers (1) can be blocked.

4. The vehicle test apparatus of claim 2, **characterized in that** the drivable, rotatable rollers (1) can be moved parallel to one another in axial direction.

5. The vehicle test apparatus of claim 2, **characterized in that** the drivable, rotatable rollers (1) can be moved axially in opposite directions.

6. The vehicle test apparatus according to one of claims 1 to 5, **characterized in that** the vehicle test apparatus is installed flush with the floor.

7. The vehicle test apparatus according to one of 1 to 5, **characterized in that** the vehicle test apparatus is installed on a lifting platform.

## Revendications

1. Dispositif pour le contrôle de véhicules, au moyen duquel différents contrôles sont exécutés sur un véhicule, les pneus du véhicule étant posés sur deux rouleaux (1) tournants pouvant être mis en mouvement, un troisième rouleau (7) coulissant axialement étant disposé entre les deux rouleaux (1) dans une plaque de soulèvement de roue (10) pouvant coulisser verticalement et disposée au-dessus d'un dispositif de contrôle d'amortisseurs (11), la totalité de la force de soulèvement de la roue lors du contrôle de l'amortisseur reposant sur ladite plaque de soulèvement de roue (10) sur laquelle sont prévus des moyens pour mesurer le déplacement axial du troisième rouleau (7).

2. Dispositif de contrôle des véhicules selon la revendication 1, **caractérisé en ce que** les rouleaux (1) tournant pouvant être mis en mouvement peuvent coulisser en direction axiale.

3. Dispositif de contrôle des véhicules selon la revendication 2, **caractérisé en ce que** le coulissement axial des rouleaux (1) tournants pouvant être mis en mouvement peut être bloqué.

4. Dispositif de contrôle des véhicules selon la revendication 2, **caractérisé en ce que** les rouleaux (1) tournant pouvant être mis en mouvement peuvent coulisser axialement parallèlement les uns aux autres.

5. Dispositif de contrôle des véhicules selon la revendication 2, **caractérisé en ce que** les rouleaux (1) tournants pouvant être mis en mouvement peuvent coulisser axialement en direction opposée.

6. Dispositif de contrôle de véhicules selon l'une des revendications 1 à 5, **caractérisé en ce que** le dispositif de contrôle peut être enterré.

7. Dispositif de contrôle de véhicules selon l'une des revendications 1 à 5, **caractérisé en ce que** le dispositif de contrôle peut être monté sur une plate-forme élévatrice.
